# EUROPÄISCHE PATENTSCHRIFT

(11) **EP 1 389 577 B1**
(45) Veröffentlichungstag und Bekanntmachung des Hinweises auf die Patenterteilung: **29.08.2007**
(21) Anmeldenummer: 03016836.3
(22) Anmeldetag: 23.07.2003
(51) Int. Cl.: B62D 25/06, B62D 29/04, B62D 65/00, B62D 29/00

(54) **Fahrzeug-Karosserieteil**
Bodywork part of a motor vehicle
Pièce de carrosserie automobile

(30) Priorität: 13.08.2002 DE 10237090
(43) Veröffentlichungstag der Anmeldung: 18.02.2004
(73) Patentinhaber: Webasto AG, 82131 Stockdorf (DE)
(72) Erfinder: Kiesewetter, Frank, 82110 Germering (DE); Özkök, Kerim, 22111 Hamburg (DE)

(56) Entgegenhaltungen:
- EP-A- 0 994 008
- DE-A- 4 328 716
- DE-C- 19 632 055
- GB-A- 730 127
- GB-A- 1 490 575
- US-A- 4 475 765

## Beschreibung

Die Erfindung betrifft Verfahren zur Herstellung eines Fahrzeug-Karosserieteils, insbesondere eines Fahrzeugdachs, eines Ladebodens oder dergleichen, nach dem Oberbegriff des Patentanspruches 1.

Ein Fahrzeug-Karosserieteil der im Oberbegriff des Patentanspruchs 1 genannten Art ist aus der DE 100 19 201 A1 bekannt und als vorgefertigtes Dachmodul ausgebildet. Dieses Dachmodul ist in Sandwich-Bauweise schichtartig aus einer die Außenhaut darstellenden Außenschale und einer die Trägerstruktur darstellenden Innenschale aufgebaut. Die beiden Schalen sind auf Grundlage eines Schaumkerns gebildet. Die der Umgebung zugewandte Seite des Schaumkerns der Außenschale ist durch eine Blech-, Kunststoff- oder Aluminiumschicht und die dem Fahrzeuginnenraum zugewandte Seite des Schaumkerns der Innenschale ist durch ein Kunststaffweichmaterial abgedeckt. Des Weiteren umfasst das Dachmodul eine abziehbare Schutzfolie, die als Schutz des Dachmoduls beim Lackieren des betreffenden Fahrzeuges dient und nach dem Lackieren abgezogen wird.

Ferner ist es aus der Praxis ein Dachmodul mit einer Kunststoffaußenhaut und einer Trägerstruktur bekannt, die in Sandwichbauweise gefertigt ist und eine Papierwabe umfasst. Bei diesem Dachmodul besteht das Problem, dass die Papierwabe im Laufe der Zeit Feuchtigkeit aufnehmen kann, was zu einer Verringerung der Steifigkeit des Dachmoduls führt.

Aus der DE 196 32 055 C1 ist ein Verfahren zur Herstellung einer Dachversteifung für Fahrzeuge bekannt, die von innen an eine Dachhaut des Fahrzeugs angebracht werden kann. Die Dachversteifung wird derart hergestellt, dass zwischen zwei Kraftliner nach einem Bandschaumverfahren Polyurethanhartschaum bandgeschäumt wird. Die Kraftliner, die aus Zellpapier bestehen, werden beidseitig mit thermoplastischem Kunststoff beschichtet. Diese Kunststoffbeschichtung dient als Wasser- und Wasserdampfsperre. Das erzeugte Halbzeug wird mittig gespalten, Anschließend werden das gespaltene Halbzeug und ein Zuschnitt eines weiteren Kraftliners in ein Formwerkzeug eingebracht. Die beiden Teile werden in dem Formwerkzeug in ihre endgültige Form umgeformt und gleichzeitig verklebt. Der aufgeklebte Kraftliner kann wiederum ebenfalls mit einer Kunststoffbeschichtung versehen sein.

Der Erfindung liegt die Aufgabe zugrunde, ein Verfahren zur Herstellung eines Fahrzeug-Karosserieteils zu schaffen, bei dem die Gefahr einer Feuchtigkeitsaufnahme der Trägerstruktur minimiert ist.

Diese Aufgabe ist erfindungsgemäß durch das Verfahren mit den Merkmalen des Patentanspruches 1 gelöst.

Der Kern der Erfindung liegt mithin darin, an der Trägerstruktur des Karosserieteils eine Schicht anzuordnen, die ein Eindringen von Feuchtigkeit bzw. Wasserdampf aus der Atmosphäre in die Trägerstruktur wirkungsvoll verhindert. Insbesondere bei Ausbildung der Trägerstruktur als Sandwich-Konstruktion mit einer Papierwabe als Kernmaterial kann damit einer etwaigen, feuchtigkeitsbedingten Schwächung der Steifigkeit des Karosserieteils entgegenwirkt werden, da die Aufnahme von Feuchtigkeit durch die Papierwabe im Wesentlichen ausgeschlossen ist.

Das gemäß dem Verfahren nach der Erfindung hergestellte Fahrzeug-Karosserieteil ist grundsätzlich für alle äußeren und inneren plattenförmigen Strukturen von Fahrzeugkarosserien geeignet, die als Verbundbauteil ausgeführt sind. Das Fahrzeug-Karosserieteil ist so auszulegen, dass die Trägerstruktur an den Flächen mit der Dampfsperrschicht versehen ist, über die Feuchtigkeit eindringen könnte. Wenn das Karosserieteil als Karosserieaußenteil ausgebildet ist, kann es als Außenhaut eine Kunststofffolie, eine Aluminium- oder eine Stahlschicht umfassen. Eine geeignete Kunststofffolie ist beispielsweise aus ABS, ASA, ASA-PC oder PC gefertigt und kann als tiefgezogener Vorformling ausgebildet sein. Wenn eine derartige Außenhaut, wie üblich, die Trägerstruktur nur einseitig überdeckt, ist die Dampfsperrschicht zweckmäßig nur an der der Außenhaut abgewandten Seite der Trägerstruktur angeordnet.

Bei Ausbildung des Karosserieteils als vorgefertigtes bzw. vormontiertes Dachmodul entsprechen dessen Abmessungen im wesentlichen denjenigen eines Karosseriedachrahmens, in den es am Umfangsrandbereich über eine Kleberaupe einsetzbar bzw. einklebbar ist. Ferner kann das Dachmodul mit üblicher Ausstattung, wie beispielsweise einem Schiebedach, einem Innenhimmel, Haltegriffen, Leuchten und dergleichen, versehen sein.

Das Karosserieteil kann auch als bewegte Fläche, z. B. als Schiebedach, als Lamelle eines Lamellen-Schiebedachs oder auch als Schiebehimmel, ausgebildet sein.

Wenn das Karosserieteil eine im Fahrzeuginneren angeordnete, plattenförmige Struktur, wie ein Ladeboden, eine Hutablage oder dergleichen, ist, ist die Außenhaut beispielsweise als Stoffkaschierung oder auch aus Hartkautschuk gebildet. Die Außenhaut kann dann die als Sandwich-Konstruktion ausgebildete Trägerstruktur an einer Seite oder auch an mehreren Seiten umschließen. Die Dampfsperrschicht kann in diesem Falle an einer oder mehreren Seiten der Trägerstruktur angeordnet sein oder auch die Trägerstruktur vollständig umschließen, so dass sie zumindest bereichsweise zwischen der Trägerstruktur und der Außenhaut angeordnet ist. Beispielsweise ist die Trägerstruktur vollständig von der Dampfsperrschicht ummantelt, die dann wiederum mit einer Stoffkaschierung versehen ist.

Die als Sandwich-Konstruktion ausgebildete Trägerstruktur des Karosserieteils ist bevorzugt mit einer Wabenstruktur, insbesondere einer Wabenstruktur auf Papier- bzw. Pappebasis, gefertigt. So kann die Sandwichstruktur aus einer gegebenenfalls zwischen zwei Glasfasermatten angeordneten Papierwabe bestehen, welche beidseits mit einer Schicht aus Polyurethan bedeckt ist. Die Polyurethanschichten können jeweils eine Armierung aus Glasfasern aufweisen.

Nach einer bevorzugten Ausführungsform des Fahrzeug-Karosserieteils ist die Dampfsperrschicht als dampfsperrende Folie ausgebildet. In diesem Fall besteht die Möglichkeit, eine Folie mit einem Temperaturausdehnungskoeffizienten auszuwählen, der einer dem so genannten Bimetall-Effekt gleichenden Verformung des Karosserieteils aufgrund unterschiedlicher Temperaturausdehnungskoeffizienten der Außenhaut und der Trägerstruktur entgegenwirkt.

Die dampfsperrende Folie ist bei einer vorteilhaften Ausführungsform des Fahrzeug-Karosserieteils eine Verbundfolie. Damit ist eine sichere Haftung der Folie auf der Trägerstruktur gewährleistet. Beispielsweise ist die Verbundfolie eine Vierschicht-Verbundfolie, die eine hochtransparente Polyesterfolie und eine schwer entflammbare Polyäthylenfolie umfasst. Zwischen diesen Folien kann eine Aluminiumschicht korrosionssicher eingebettet sein. Grundsätzlich kann jede Kunststoffverbundfolie mit guten Dampfsperreigenschaften insbesondere der außenliegenden Folienschicht eingesetzt werden. Es kann selbstverständlich auch eine Einschichtfolie mit hinreichenden Dampfsperreigenschaften eingesetzt werden.

Die Verbundfolie kann auch eine Aluminiumverbundfolie sein, beispielsweise eine Verbundfolie, bei der eine Aluminiumfolie einseitig mit Polyäthylenschaum beschichtet ist. Zur Verstärkung liegt zwischen der Aluminiumfolie und dem Polyäthylenschaum ein Gittergewebe.

Alternativ kann die dampfsperrende Folie auch eine hochelastische Polyurethanfolie sein, die aus thermoplastischem Polyurethan gefertigt ist. Die Polyurethanfolie kann transparent sein. Auch Polypropylen kann beispielsweise als Werkstoff für die dampfsperrende Folie eingesetzt werden.

Die dampfsperrende, aus Kunststoff und/oder Metall bestehende Folie hat vorzugsweise eine Dicke zwischen 0,25 und 1 mm, ist aber nicht auf diese Dicke beschränkt.

Die Folie kann selbstklebend ausgebildet sein oder mittels eines Klebers auf die Trägerstruktur aufgebracht sein.

Bei der Herstellung des Fahrzeug-Karosserieteils kann die dampfsperrende Folie in den einem geeigneten Formwerkzeug erfolgenden Fertigungsprozess für den Materialverbund aus der Außenhaut und der Trägerstruktur integriert sein. Die dampfsperrende Folie kann bei Auslegung des Karosserieteils als Dachmodul aber auch nach Fertigung des Materialverbunds aus der Außenhaut und der Trägerstruktur auf die Innenseite der Trägerstruktur aufgebracht, beispielsweise aufgeklebt werden.

Bei einer alternativen Ausführungsform des Fahrzeug-Karosserieteils ist die Dampfsperrschicht aus einer Flüssigdampfsperre gebildet. Bei Auslegung des Karosserieteils als Dachmodul kann eine derartige, beispielsweise aus einer lmprägnierflüssigkeit hergestellte Beschichtung der Innenseite der Trägerstruktur nach der Herstellung des Materialverbundes aus der Außenhaut und der Trägerstruktur maschinell oder manuell aufgesprüht oder aufgestrichen werden.

Weitere Vorteile und vorteilhafte Ausgestaltungen des Gegenstandes nach der Erfindung sind der Beschreibung, der Zeichnung und den Patentansprüchen entnehmbar.

Zwei Ausführungsbeispiele eines gemäß dem Verfahren nach der Erfindung hergestellten Fahrzeug-Karosserieteils sind in der Zeichnung schematisch vereinfacht dargestellt. Es zeigt
- Fig. 1: eine Teilansicht eines Personenkraftwagens mit einem Dachmodul;
- Fig. 2: einen Schnitt durch das Dachmodul;und
- Fig. 3: einen Schnitt durch einen Ladeboden eines Kraftfahrzeuges.

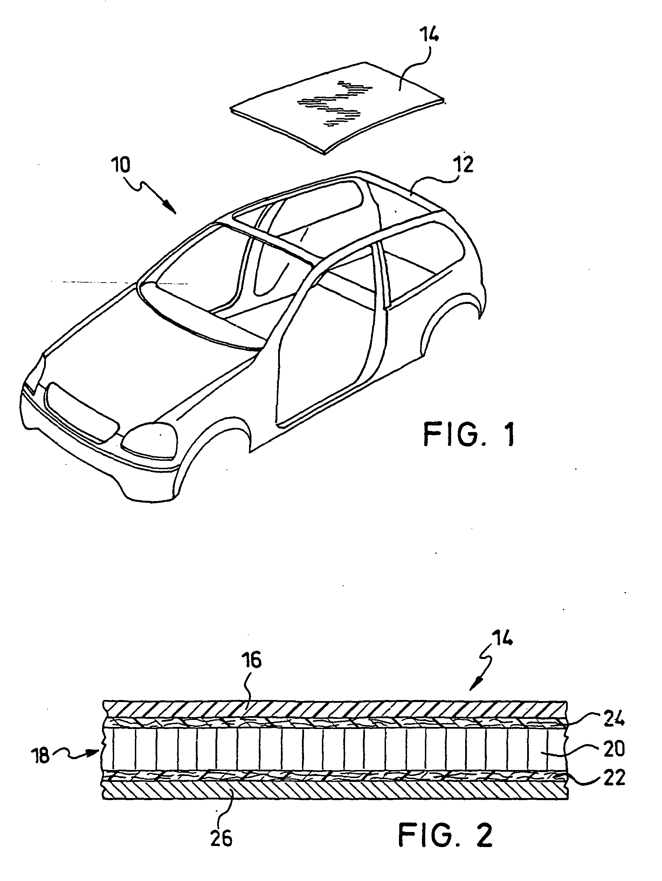

In Fig. 1 ist ein als Personenkraftwagen ausgebildetes Kraftfahrzeug 10 dargestellt, dessen Karosserie einen Dachrahmen 12 aufweist, in den ein erfindungsgemäß ausgebildetes und vormontiertes Dachmodul 14 einsetzbar ist, das einen Fahrzeuginnenraum überdeckt. Die Verbindung zwischen dem Dachmodul 14 und dem Dachrahmen 12 erfolgt über eine hier nicht näher dargestellte, umlaufende Kleberaupe.

In Fig. 2 ist ein der Übersichtlichkeit halber nicht maßstabsgetreuer Schnitt durch das in Fig. 1 dargestellte Dachmodul 14 gezeigt, welches mehrlagig aufgebaut ist und vor dem Einsetzen in den Dachrahmen 12 gefertigt ist. Das Dachmodul 14 umfaßt eine aus Kunststoff, wie beispielsweise ASA-PC, gefertigte Außenhaut 16, die eine Dicke zwischen 0,2 mm und 2,0 mm aufweist und als Tiefziehteil ausgebildet sein kann. Die Außenhaut 16 bildet die bezogen auf den Fahrzeuginnenraum außenliegende Oberfläche des Dachmoduls 14, d. h. die Dachfläche des Kraftfahrzeuges 10.

Die Außenhaut 16 ist mit ihrer dem Fahrzeuginnenraum zugewandten Seite, d. h. mit ihrer Unterseite bzw. Innenseite, auf einer Trägerstruktur 18 angeordnet, die als Sandwich-Konstruktion ausgebildet ist und eine Papierwabe 20 umfaßt, die zwischen zwei Schichten 22, 24 aus einem Polyurethan/Glasfaser-Gemisch angeordnet ist. Die Trägerstruktur 18 hat eine Gesamtdicke von etwa 10 mm.

An der Unterseite der Trägerstruktur 18 ist eine Dampfsperrschicht 26 angeordnet, die aus einer Vierschicht-Verbundfolie besteht, welche eine hochtransparente Polyesterfolie, eine schwer entflammbare Polyäthylenfolie sowie eine darin korrosionssicher eingebettete Aluminiumschicht umfaßt. Die Dampfsperrschicht 26 hat eine Dicke von 0,25 bis 1 mm.

Alternativ besteht die Dampfsperrschicht 18 beispielsweise aus einer transparenten Polyurethanfolie oder einer Aluminiumverbundfolie. Die Dampfsperrschicht kann aber auch aus einer auf die Trägerstruktur aufgetragenen Imprägnierflüssigkeit gebildet sein.

Die Dampfsperrschicht 26 führt zu einer Verbesserung der Wetter- und Klimabeständigkeit des Dachmoduls 14, da eine Aufnahme von Wasserdampf bzw. Feuchigkeit aus der Atmosphäre im wesentlichen ausgeschlossen ist.

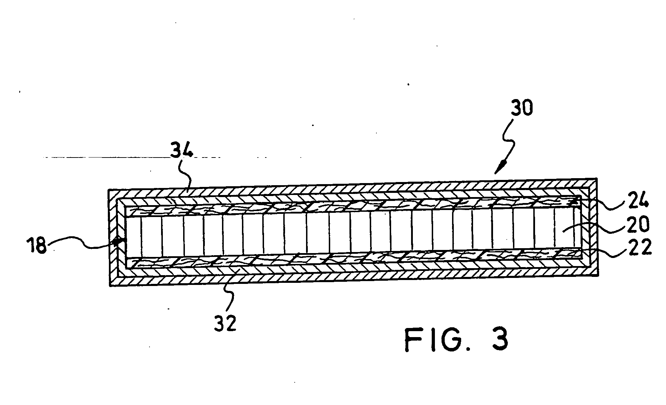

In Fig. 3 ist ein Karosserieteil 30 dargestellt, das als ein in einem nicht näher dargestellten Laderaum eines Kraftfahrzeuges angeordneter Ladeboden ausgebildet ist.

Das Karosserieteil 30 umfaßt eine Trägerstruktur 18, die eine Sandwich-konstruktion ist und eine Papierwabe 20 umfaßt, welche zwischen zwei Polyurethan/Glasfaser-Schichten 22, 24 eingebettet ist.

Die Trägerstruktur 18 ist vollständig von einer Dampfsperrschicht 32 umschlossen, die aus einer Aluminiumverbundfolie gebildet ist. Die Dampfsperrschicht 32 ist wiederum vollständig von einer Außenhaut 34 überdeckt, die eine Stoffkaschierung darstellt.

### Bezugszeichen

- 10: Kraftfahrzeug
- 12: Dachrahmen
- 14: Dachmodul
- 16: Außenhaut
- 18: Trägerstruktur
- 20: Papierwabe
- 22: Polyurethan/Glasfaser-Schicht
- 24: Polyurethan/Glasfaser-Schicht
- 26: Dampfsperrschicht
- 30: Ladeboden
- 32: Dampfsperrschicht
- 34: Außenhaut

## Patentansprüche

1. Verfahren zur Herstellung eines Fahrzeug-Karosserieteils, insbesondere Fahrzeugdachs, Ladebodens oder dergleichen, umfassend einen Materialverbund mit einer Außenhaut (16, 34) und einer Trägerstruktur (18), die als Sandwich-Konstruktion ausgebildet ist, wobei die Trägerstruktur (18) zumindest bereichsweise mit einer weiteren, eine Dampfsperrschicht darstellenden Schicht (26, 32) versehen wird, **dadurch gekennzeichnet, dass** die eine Dampfsperrschicht darstellende Schicht (26, 32) als dampfsperrende Verbundfolie ausgebildet ist oder aus einer lmprägnierflüssigkeit gebildet wird.

2. Verfahren nach Anspruch 1, **dadurch gekennzeichnet, dass** die Verbundfolie (26,32) mindestens eine Aluminiumschicht umfasst.

3. Verfahren nach Anspruch 1, **dadurch gekennzeichnet, dass** die dampfsperrende Folie aus thermoplastischem Polyurethan gebildet ist.

4. Verfahren nach einem der Ansprüche 1 bis 3, **dadurch gekennzeichnet, dass** die dampfsperrende Folie eine selbstklebende Folie ist.

5. Verfahren nach einem der Ansprüche 1 bis 4, **dadurch gekennzeichnet, dass** die Dampfsperrschicht eine Dicke zwischen 0,25 und 1 mm aufweist.

## Claims

1. Method for producing a motor vehicle body part, in particular a vehicle roof, cargo floor or the like, comprising a material composite having an outer skin (16, 34) and a supporting structure (18), which is formed as a sandwich construction, the supporting structure (18) being provided, at least in some areas, with a further layer (26, 32) constituting a vapour barrier layer, **characterized in that** the layer (26, 32) constituting a vapour barrier layer is formed as a vapour-blocking composite film or is formed from an impregnating liquid.

2. Method according to Claim 1, **characterized in that** the composite film (26, 32) comprises at least one aluminium layer.

3. Method according to Claim 1, **characterized in that** the vapour-blocking film is formed from thermoplastic polyurethane.

4. Method according to one of Claims 1 to 3, **characterized in that** the vapour-blocking film is a self-adhesive film.

5. Method according to one of Claims 1 to 4, **characterized in that** the vapour barrier layer has a thickness between 0.25 and 1 mm.

## Revendications

1. Procédé de fabrication d'une pièce de carrosserie automobile, en particulier d'un toit de véhicule, d'un fond de chargement ou similaire, comprenant un matériau composite doté d'une enveloppe extérieure (16, 34) et d'une structure porteuse (18), qui est réalisée sous forme de construction sandwich, la structure porteuse (18) étant pourvue au moins par zones d'une autre couche (26, 32) représentant une couche pare-vapeur, **caractérisé en ce que** la couche (26, 32) représentant une couche pare-vapeur est réalisée en tant que feuille composite faisant barrière à la vapeur ou **en ce qu'**elle est formée à partir d'un liquide d'imprégnation.

2. Procédé selon la revendication 1, **caractérisé en ce que** la feuille composite (26, 32) comprend au moins une couche d'aluminium.

3. Procédé selon la revendication 1, **caractérisé en ce que** la feuille faisant barrière à la vapeur est formée à partir d'un polyuréthane thermoplastique.

4. Procédé selon l'une quelconque des revendications 1 à 3, **caractérisé en ce que** la feuille faisant barrière à la vapeur est une feuille autocollante.

5. Procédé selon l'une quelconque des revendications 1 à 4, **caractérisé en ce que** la couche pare-vapeur présente une épaisseur comprise entre 0,25 et 1 mm.
